# EUROPEAN PATENT APPLICATION

(11) **EP 2 485 113 A1**
(43) Date of publication of application: **08.08.2012**
(21) Application number: 09850106.7
(22) Date of filing: 24.11.2009
(51) Int. Cl.: G06F 1/16, G06F 1/00

(54) **LIFT APPARATUS**

(30) Priority: 29.09.2009 KR 20090092408
(71) Applicant: Sentronix Co., Ltd., Suwon-si, Gyeonggi-do 441-822 (KR)
(72) Inventor: LEE, Jeong Min, Suwon-si Gyeonggi-do 442-070 (KR)
(74) Representative: O'Neill, Brian
(86) International application number: PCT/KR2009/006941
(87) International publication number: WO 2011/040674

(57) **Abstract**

A lifting device is disclosed. The lifting device, which includes a bracket installed on a wall, a moving part movably coupled to the bracket, a winding part coupled to the moving part, a wire being wound on the winding part, and a driving unit winding the wire so that the moving part can be moved, can realize a slimmer design while controlling the position of a weight.

## Description

### [Technical Field]

The present invention relates to a lifting device.

### [Background Art]

Flat-screen display devices, such as LCD TV and PDP TV, which can utilize a narrow space efficiently, are replacing the cathode ray tube TV, and the demand for the flat-screen displays is expected to grow continuously. The flat-screen display devices are often installed on a wall, utilizing the interior space and forming an aesthetic appearance.

Recently, as the flat-screen display devices have become thinner, wall mounts for installing the flat-screen display devices on the wall have become also thinner and slimmer.

Especially, it is required that wall mounts that are equipped with an electromotive device therein to control the distance of the flat-screen display device separated from the wall and to control the angle of viewing have a greater driving force to cope with the flat-screen display devices that are becoming bigger.

Accordingly, there is an increasing demand for a wall mount that has a greater driving force while it is thin enough to keep the flat-screen display device from being separated too much from the wall.

Nevertheless, in order to increase the driving force, the wall mount needs to have a driving unit with a greater torque, but this has become technical hindrance for the wall mount from being thinner.

### [Disclosure]

### [Technical Problem]

The present invention provides a lifting device that has a slimmer form while being capable of controlling the position of a weight.

### [Technical Solution]

An aspect of the present invention can provide a lifting device that can include: a bracket installed on a wall; a moving part movably coupled to the bracket; a winding part coupled to the moving part; a wire wound to the winding part; and a driving unit winding the wire to move the moving part.

The moving part can be coupled to the bracket, and the bracket can be extended vertically so as to guide a movement of the moving part.

The winding part can be a moving pulley that is rotatably coupled to the moving part. The moving pulley can be constituted in plurality, and the lifting device can also include a first fixed pulley interposed between the plurality of moving pulleys so as to wind the wire and coupled to one end of the bracket.

The moving part can be extended vertically so that a movement of the moving part can be guided by the bracket, and a traveling groove can be formed in the bracket in a direction that the bracket is extended, and the moving part can include: a guide member slidably inserted in the traveling groove; and a supporting cover, an inner side of the supporting cover slidably covering an outer side of the bracket.

The driving unit can be coupled to the moving part, and the bracket can also include a second fixed pulley coupled to one end of the bracket so as to wind the wire. The bracket can be extended vertically so as to guide a movement of the moving part.

A guide hall can be formed in the bracket in a direction that the bracket is extended, and the winding part can be movably inserted in the guide hall. The lifting device can also include a moving guide roller coupled to the moving part so as to support either side of the bracket.

The driving unit can include a first driving unit and a second driving unit respectively winding either end of the wire, and the driving unit can include: a driving motor generating driving force; a spur gear part including a plurality of spur gears that increase the driving force; and a winding pulley engaged with the spur gear part so as to wind the wire.

The lifting device can also include a stopper configured to prevent the wire from being unwound, and the stopper can include: a pressure bar, one end thereof being adjacent and rotatably coupled to the wire; and an actuator providing pressure to the end of the pressure bar so that the one end of the pressure bar can hold the wire.

The lifting device can also include a winding guide pulley configured to guide the wire being wound on the driving unit.

The lifting device can also include a controller configured to apply and control an operation pulse signal to the driving unit, and the controller can be configured to count the operation pulse signal while the moving part is moving between an upper limit and a lower limit of a movement range of the bracket.

The lifting device can also include a limit switch coupled to the upper limit on an upper side of the bracket, and the controller can be configured to assess the upper limit by a position signal of the limit switch for the moving part.

The controller can be configured to assess the lower limit by an input of a user.

A hanging groove, which is extended to both sides of an upper surface of the moving part, can be formed on the upper surface of the moving part.

### [Advantageous Effects]

According to some embodiments of the present invention, a slimmer design can be realized while the position of a weight can be controlled.

### [Description of Drawings]

FIG. 1 is a front view of a lifting device in accordance with a first embodiment of the present invention.
FIG. 2 is a rear view of a portion of the lifting device in accordance with a first embodiment of the present invention.
FIG. 3 is a side view showing the lifting device in accordance with a first embodiment of the present invention installed on a wall.
FIGS. 4 and 5 are rear views showing the operation of the lifting device in accordance with a first embodiment of the present invention.
FIGS. 6 and 7 are exploded partial views showing the operation of a stopper of the lifting device in accordance with a first embodiment of the present invention.
FIG. 8 is a front view of a lifting device in accordance with a second embodiment of the present invention.
FIG. 9 is a side view showing the lifting device in accordance with a second embodiment of the present invention installed on a wall.
FIG. 10 is a front view showing a portion of the lifting device in accordance with a second embodiment of the present invention.
FIG. 11 is a front view of a lifting device in accordance with a third embodiment of the present invention.
FIG. 12 is a front view of a lifting device in accordance with a fourth embodiment of the present invention.
FIG. 13 is a perspective view of a lifting device in accordance with a fifth embodiment of the present invention.
FIG. 14 is a perspective view showing how the lifting device in accordance with the fifth embodiment of the present invention is used.
FIG. 15 is an exploded front view of the lifting device in accordance with a fifth embodiment of the present invention.
FIG. 16 is a perspective view showing a moving part body of the lifting device in accordance with a fifth embodiment of the present invention.
FIG. 17 is an exploded perspective view showing a portion of the lifting device in accordance with a fifth embodiment of the present invention.
FIG. 18 is an exploded front view of a portion of the lifting device in accordance with a fifth embodiment of the present invention.

### <Description of Key Elements>

100: moving part 200: stopper
300: bracket 400: pulley frame
450: driving frame
1000, 2000, 3000, 4000, 5000: lifting device

### [Mode for Invention]

The technical features and advantages of the present invention will become more apparent through the detailed description and accompanying drawings below.

Hereinafter, certain embodiments of a lifting device in accordance with the present invention will be described with reference to the accompanying drawings. In describing the embodiment with reference to the accompanying drawings, any identical or corresponding elements will be assigned with the same reference numerals, and the description for the identical or corresponding elements will not be redundantly provided.

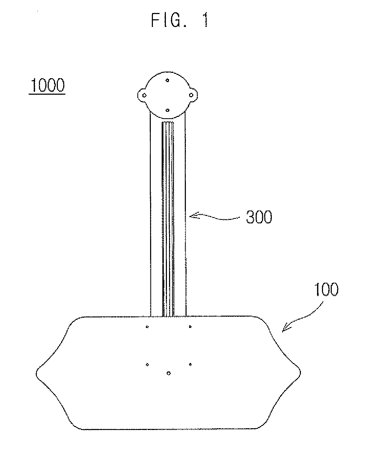

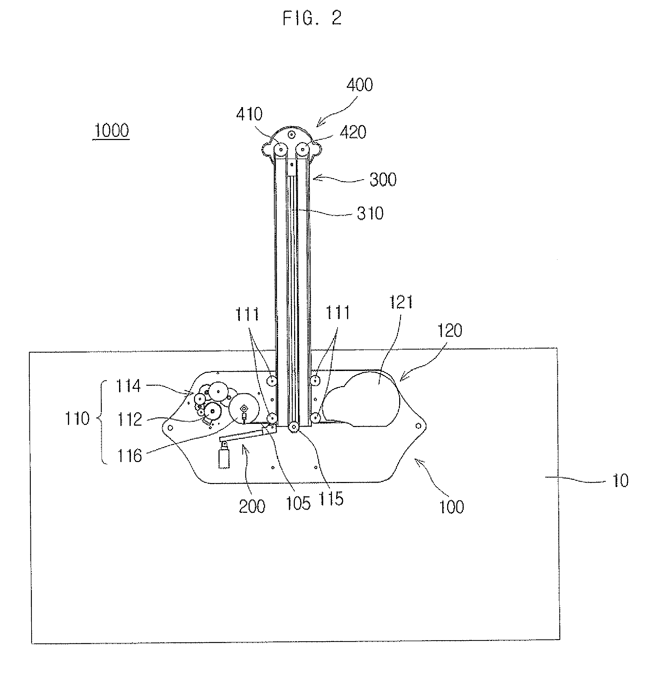

FIG. 1 is a front view of a lifting device 1000 in accordance with a first embodiment of the present invention, and FIG. 2 is a rear view of a portion of the lifting device 1000 in accordance with a first embodiment of the present invention. As illustrated in FIGS. 1 and 2, the lifting device 1000 in accordance with a first embodiment of the present invention includes a bracket 300, a moving part 100, a wire 105 and driving units 110, 120 to realize a slimmer design and adjust the position of a weight.

The lifting device 1000 refers to a device that can install the weight on a wall 20 and adjust the position of the weight. The weight can be a display device that can display an image, for example, a large flat-screen TV. Here, the lifting device 1000 can be a lifting device 1000 for a display that can adjust the installation height of the display device 10.

The bracket 300 itself is installed on the wall and thus can install the lifting device 10000 and the display device 10 on the wall 10. The bracket 300 can be extended vertically so as to guide the movement of the moving part 100. Here, the bracket 300 can function as a kind of a guide bar that guides the movement of the moving part 100.

The bracket 300 can have screw holes or a coupling structure for installation on the wall 20.

Formed inside the bracket 300 can be a guide hall 310 in the direction that the bracket 300 is extended. The guide hall 310 has a moving pulley 115 inserted moveably therein, and inner walls of the guide hall 310 support both sides of the moving pulley 115 to facilitate a more stable movement of the moving part 100.

Coupled to an upper end of the bracket 300 can be a pulley frame 400, to which fixed pulleys 410, 420 can be rotatably coupled. Wire 105 is wound on the fixed pulleys 410, 420, by which the moving direction of the wire 105 is reversed.

Two fixed pulleys 410, 420 can be separated and coupled to either side of the pulley frame 400 so that the moving pulley 115 of the moving part 100, which will be described later, can be interposed therebetween.

The moving part 100 can be movably coupled to the bracket 300. As illustrated in FIG. 2, one side of the moving part 100 can be coupled to the display device 10, and the other side of the moving part 100 can be coupled to the bracket 300. In effect, the moving part 100 can movably couple the display device 10 to the bracket 300.

A winding part, i.e., the moving pulley 115, on which the wire 105 is wound, can be rotatably coupled at a center of the moving part 100. In other words, the moving pulley 115 can be rotatably coupled to a shaft formed on the other side of the moving part 100. Here, the shaft can be movably inserted in the guide hall 310. In effect, the moving pulley 115 can be movably inserted in the guide hall 310.

Moving guide rollers 111 that support either side of the bracket 300 can be rotatably coupled to the moving part 100. The moving guide rollers 111 supports either side of the bracket 300 so that a more stable vertical movement of the moving part 100 can be realized.

The wire 105 can be wound the moving pulley 115 and the fixed pulleys 410, 420 so that the moving part 100 can be moved. A central portion of the wire 105 is wound on the moving pulley 115 so as to support the moving part 100, and either side of the wire 105 can be wound on the fixed pulleys 410, 420 so that both ends of the wire 105 are arranged downward.

Either end of the wire 105 can pass between the bracket 300 and the moving guide rollers 111 and can be wound on a first driving unit 110 and a second driving unit 120, respectively. Here, an outer circumferential surface of each of the moving guide rollers 111 can be formed with a groove along the perimeter of the moving guide roller 111 so that the wire 105 can be wound. In other words, the moving guide rollers 111 can function as a kind of pulley.

The first driving unit 110 and the second driving unit 120 can be coupled to either side of the moving part 100. The driving units 110, 120 are the parts that can move the moving part 100 by winding the wire 105. The first driving unit 110 and the second driving unit 120 can provide more increased driving power to the moving part 100 by winding either end of the wire 105.

Moreover, the lifting device 1000 can lessen the capacity that the first driving unit 110 and the second driving unit 120 must have, by dispersing the load generated by the moving part 100 to the first driving unit 110 and the second driving unit 120.

The first and second driving units 110, 120 can include a driving motor 112, a spur gear part 114 and a winding pulley 116.

The driving motor 112 generates driving force, which can be transferred to the spur gear part 114. The spur gear part 114 includes a plurality of spur gears that are arranged parallel to one another. The driving force of the driving motor 112 can be increased while the driving force is passed through spur gear part 114.

The driving units can be shielded by a cover 121.

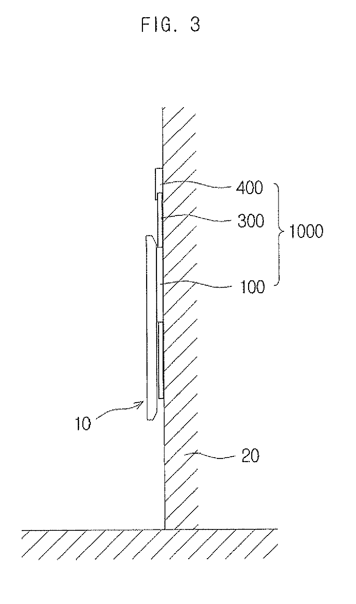

FIG. 3 is a side view showing the lifting device 1000 in accordance with a first embodiment of the present invention installed on a wall. As illustrated in FIG 3, the spur gear part 114 can prevent the driving units 110, 120 from being thicker while increasing the driving force of the driving motor 112, and can further contribute to making the lifting device 1000 thinner.

Moreover, the winding pulley 116 is engaged with the spur gear part 114, and the wire 105 can be wound on the winding pulley 116. The winding pulley 116 is also arranged parallel with the spur gears and can prevent the driving units 110, 120 from being thicker.

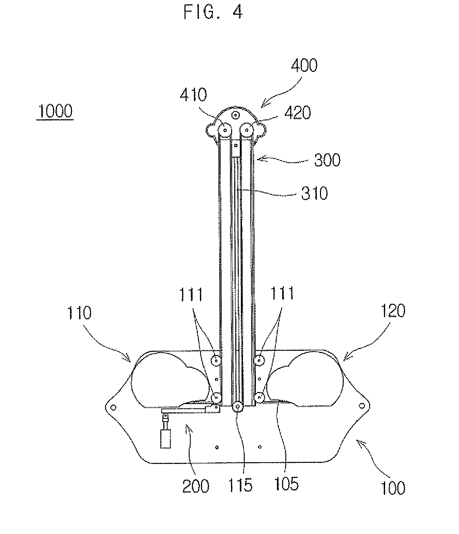

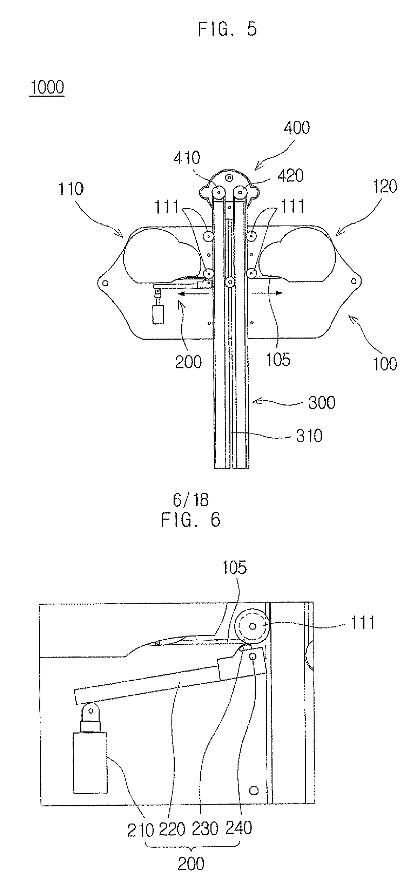

FIGS. 4 and 5 are rear views showing the operation of the lifting device 1000 in accordance with a first embodiment of the present invention. As illustrated in FIGS. 4 and 5, the moving pulley 115 can be ascended by winding the wire 105 by operating the first driving unit 110 and the second driving unit 120 while the moving part 100 is placed at a lower end of the bracket 300. Accordingly, the moving part 100, to which the moving pulley 115 is coupled, is ascended, thereby ascending the display device 10, which is coupled to the moving part 100.

As described above, the lifting device 1000 has a power transfer structure by using the wire 105 and the moving pulley 115, allowing a small capacity of driving force to lift the display device 10.

In other words, by having a more efficient power transfer structure, the lifting device 1000 can use a smaller capacity of driving motor 112. Furthermore, by using the spur gear part 114, the lifting device 1000 can have a thinner form, by further improving the power transfer efficiency of the driving units 110, 120.

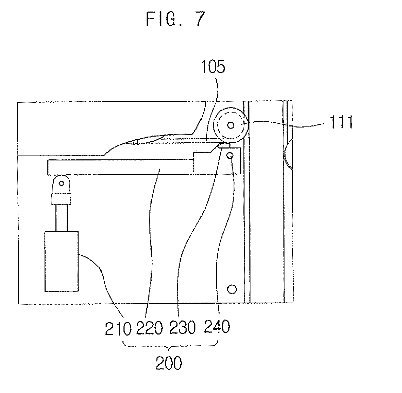

FIGS. 6 and 7 are exploded partial views showing the operation of a stopper 200 of the lifting device 1000 in accordance with a first embodiment of the present invention. As illustrated in FIGS. 6 and 7, the stopper 200 prevents the wire 105 that is wound on the winding pulley from being unwound while the moving part 100 is stopped, thereby preventing the driving units 110, 120 from being damaged by an impact from outside.

The stopper 200 can include a pressure bar 220 and an actuator 210. One end of the pressure bar 220 is adjacent to the moving guide roller 111 and thus can be rotatably coupled to the moving part 100 about a rotation axle 240.

A friction member 230 can be coupled to one end of the pressure bar 220 that faces the wire 105. A material with a great friction on its surface, for example, rubber, can be used for the friction member 230.

The actuator 210 can be coupled to the other end of the pressure bar 220. A driving source, for example, solenoid, can be used for the actuator 210.

As shown in FIG. 6, the actuator 210 can be withdrawn while the driving units 110, 120 are operated and the wire 105 is wound or unwound on the winding pulley 116, to allow a smooth movement of the wire 105.

However, as shown in FIG. 7, while the driving units 110, 120 are not operating and the moving part 100 is stopped, moving the actuator 210 forward and rotating the other end of the pressure bar 220 can cause one end of the pressure bar 220 to rotate about the rotation axle 240, thereby allowing the friction member 230 to press the wire 105 toward the moving guide roller 111.

As such, the wire 105 can be interposed between the moving guide roller 111 and the pressure bar 220 and can be held by the pressure bar 220. Therefore, even if an external force or load were applied to the moving part 100, the wire 105 is held by the stopper 200 and prevented from being unwound from the winding pulley 116, protecting the driving units 110, 120.

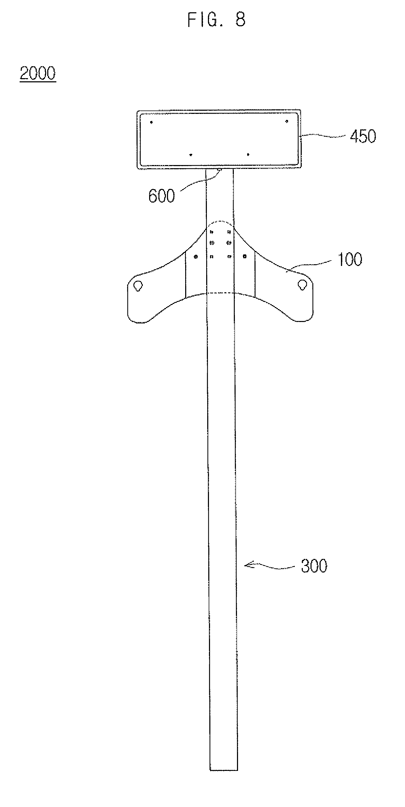

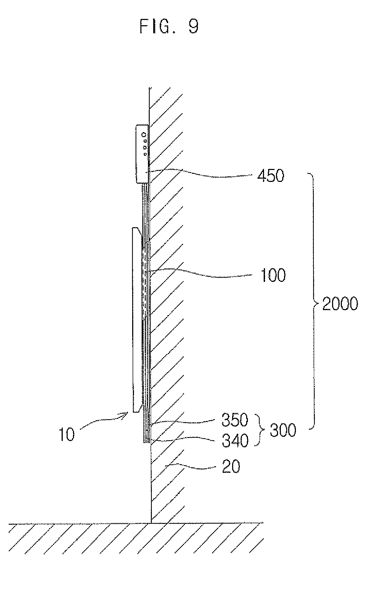

FIG. 8 is a front view of a lifting device 2000 in accordance with a second embodiment of the present invention, and FIG. 9 is a side view showing the lifting device 2000 in accordance with a second embodiment of the present invention installed on a wall. As illustrated in FIGS. 8 and 9, the lifting device 2000 in accordance with a second embodiment of the present invention includes the driving units 110, 120, which are coupled to one end of the bracket 300, to realize a slimmer design and adjust the position of the display device 10.

The bracket 300 is installed on the wall 20, and coupled to an upper end of the bracket 300 can be a driving frame 450, to which the first driving unit 110 and the second driving unit 120 can be coupled.

Here, the bracket 300 can include a front guide bar 340 and a rear guide bar 350, and the moving part 100 can be interposed between the front guide bar 340 and the rear guide bar 350 and vertically-movably coupled to the bracket 300.

In effect, by placing the first driving unit 110 and the second driving unit 120 at one end of the bracket 300, the lifting device 2000 of the present embodiment can form the moving part 100, which is placed on a back side of the display device 10, to be much thinner, and thus the display device 10 can be more closely installed on the wall 20, thereby providing a more improved external appearance to a user

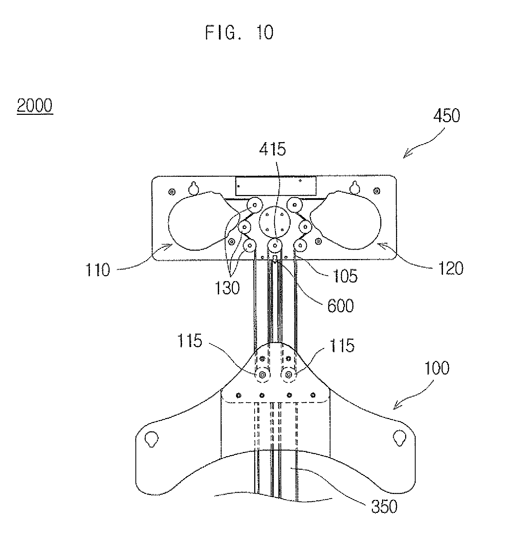

FIG. 10 is a front view showing a portion of the lifting device 2000 in accordance with a second embodiment of the present invention. As illustrated in FIG. 10, the driving frame 450 is coupled to the upper end of the bracket 300, and a fixed pulley 415 can be coupled to the driving fame 450.

Rotatably coupled to the moving part 100 can be, for example, two moving pulleys 115. Here, a center portion of the wire 105 can be wound on fixed pulleys 410, 420, and either end of the wire 105 can be wound on moving pulleys 115 so as to support the load of the moving part 100.

Either end of the wire 105 is wound on the first driving unit 110 and the second driving unit 120, and winding guide pulleys 130 are rotatably coupled to the driving frame 450 in between the first driving unit 110, the second driving unit 120 and the moving pulleys 115. As such, either end of the wire 105 that are wound on the first driving unit 110 and the second driving unit 120 can be guided.

In effect, the lifting device 2000 has a power transfer structure by using the wire 105 and the moving pulleys 115 and simplifies the structure of the lifting device 2000 on the back side of the display device 10 by placing the first driving unit 110 and the second driving unit 120 on one end of the bracket 300. Therefore, the display device 10 can be installed more closely to the wall 20.

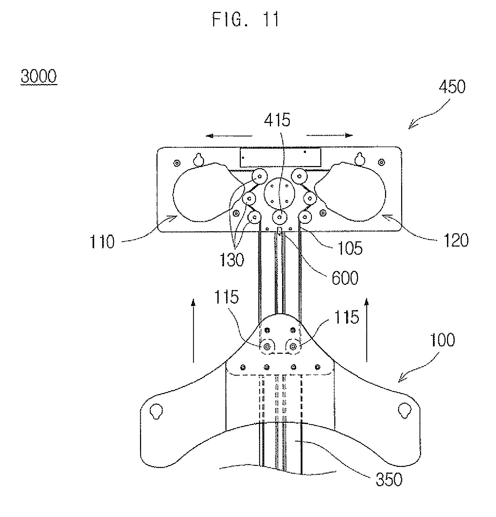

FIG 11 is a front view of a lifting device 3000 in accordance with a third embodiment of the present invention. As illustrated in FIG 11, in the lifting device 3000 in accordance with the present embodiment, the fixed pulleys 410, 420 are omitted, and the wire 105 is wound on the moving pulley 115 so as to support the load of the moving part 100. Moreover, by having either end of the wire 105 wound on the first driving unit 110 and the second driving unit 120, respectively, the moving path interposed between the first driving unit 110 and the second driving unit 120 is shortened, thereby increasing the winding speed of the wire 105 and improving the moving speed of the moving part 100.

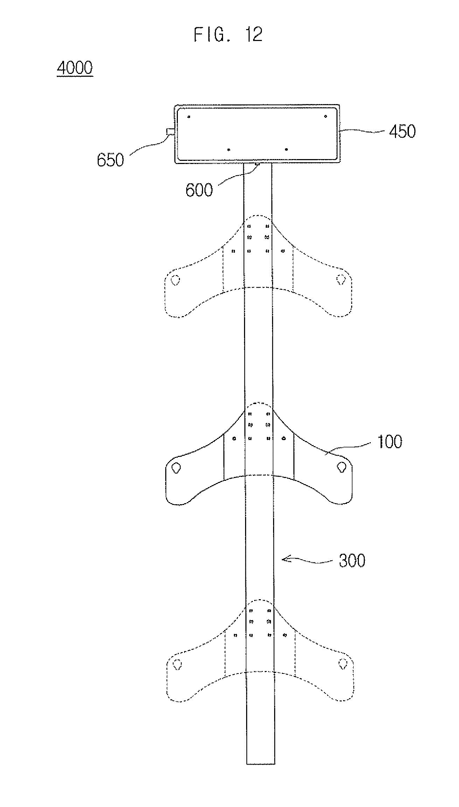

FIG. 12 is a front view of a lifting device 4000 in accordance with a fourth embodiment of the present invention. The lifting device 4000 in accordance with the present embodiment can further include a limit switch 600, a setup switch 650 and a controller (not shown) in addition to the lifting device 3000 in accordance with a third embodiment of the present invention.

The limit switch 600 can be a component for recognizing an upper limit of movement of the moving part 100 with respect to the range of movement of the moving part 100. By being coupled to a lower end of the moving frame 450, which is placed on an upper side of the bracket 300, the limit switch 600 can transmit the position of the moving part 100 when the moving part 100 arrives at an upper end of the bracket 300.

The controller can be electrically coupled with the first driving unit 110, the second driving unit 120, the limit switch 600 and the setup switch 650, which will be described later. The controller can be a kind of micro control unit that applies an operation signal to the first driving unit 110 and the second driving unit 120.

In case the driving motor 112 of the first driving unit 110 and the second driving unit 112 is, for example, a brushless DC (BLDC) motor, the controller can apply an operation pulse signal to the driving motor 112 to operate the first driving unit 110 and the second driving unit 120.

The setup switch 650 can be a component for the user to input a lower movement limit of the moving part 100 to the lifting device 4000 with respect to the range of movement of the moving part 100. The setup switch 650 can be coupled to a side surface of the moving frame 450.

Once the lifting device 4000 is installed on the wall 20, the user can operate the lifting device 4000. Here, the setup switch 650 can also function as an operation switch of the lifting device 4000. In effect, after the installation of the lifting device 4000, the user can use the setup switch 650 to initiate the operation of the lifting device 4000.

Once the operation signal of the lifting device 4000 is transferred to the controller from the setup switch 650, the controller can apply the operation pulse signal to the driving motor 112 so that the moving part 100 can be ascended. The operation pulse signal can refer to a pulse signal that the controller applies to the driving motor 112 in order to drive the driving motor 112.

Once the moving part 100 is ascended by the operation pulse signal and the moving part 100 touches the limit switch 600, the controller can recognize that the moving part 100 is at its upper limit of movement by a position signal of the moving part 100 that the limit switch 600 transmits to the controller.

Next, the controller can apply an operation signal to the driving motor 112 so that the moving part 100 can be descended. Once the moving part 100 is descended by the operation pulse signal and arrives at a position that is desired to be set as its lower limit, the user can use the setup switch 650 to input the lower limit of the movement of the moving part 100 to the controller.

Here, while the moving part 100 moves from the upper limit to the lower limit, the controller can count the number of operation pulse signals applied to the driving motor 112, and can assess the distance between the upper limit and the lower limit using the number of operation pulse signals.

Then, the controller can transmit the operation pulse signal to the driving motor so that the moving part 100 can be ascended, and the moving part 100 can be ascended again. When the moving part 100 is positioned at a particular point (e.g., a middle point between the upper limit and the lower limit) between the upper limit and the lower limit, the controller can stop the application of the operation pulse signal to the first and second driving units 110, 120 to stop the movement of the moving part 100 and to stop a setup operation of the lifting device 4000.

Afterwards, in case the user adjusts the vertical position of the moving part 100 of the lifting device 4000, the controller can assess the current position of the moving part 100 by adding or subtracting the number of operation pulse signals applied to the driving motor 112 from the total number of operation pulse signals applied to the driving motor 112 while the moving part 100 is moving between the upper limit and the lower limit.

For instance, if the user sets a first position and a second position of the moving part 100 of the lifting device 4000, the controller can store the position (the first position or the second position) set by the user by adding or subtracting the number of operation pulse signals for moving the moving part 100 to the first position or the second position from the total number of operation pulse signals applied to the driving motor 112 while the moving part 100 is moving between the upper limit and the lower limit.

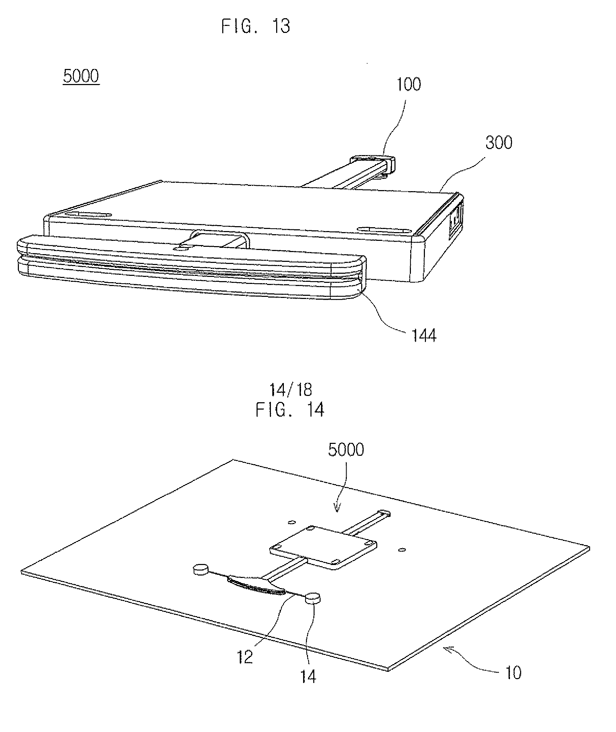

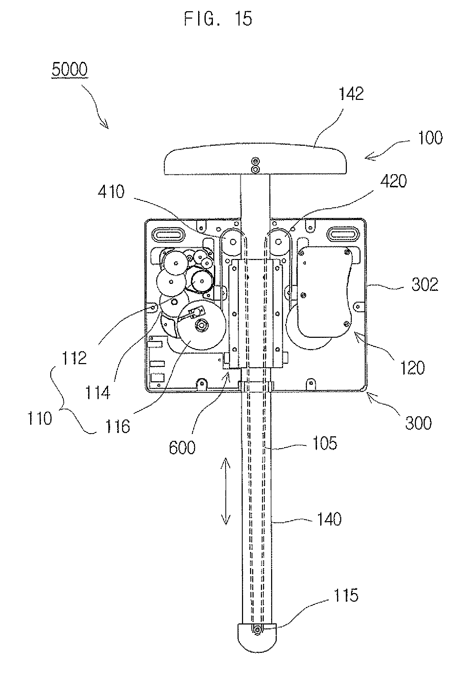

FIG. 13 is a perspective view of a lifting device 5000 in accordance with a fifth embodiment of the present invention, and FIG 14 is a perspective view showing how the lifting device 5000 in accordance with the fifth embodiment of the present invention is used. FIG. 15 is an exploded front view of the lifting device 5000 in accordance with a fifth embodiment of the present invention.

As illustrated in FIGS. 13 to 15, in the lifting device 5000 in accordance with a fifth embodiment of the present invention, the first driving unit 110 and the second driving unit 120 are coupled to the bracket 300, and the moving part 100 is coupled to the back side of the display device 10 and vertically-movably supported by the bracket, allowing the display device 10 to move up and down.

The moving part 100 of the present embodiment can include a moving part body 140, a hanging part 142 and a winding part 115. The moving part body 140 can have a form that is extended vertically so that the movement of the moving part 100 can be guided by the bracket 300.

The hanging part 142 is coupled to an upper end of the moving part body 140. The hanging part 142 has a form that is extended to both sides of the moving part body 140, and a hanging groove 144, which is extended in directions that the hanging part 142 is extended, can be formed on an upper surface of the hanging part 142.

As illustrated in FIG. 14, a fixing wire 12, which is fixed by a fixing terminal 14, can be coupled to the back side of the display device 10. By catching the fixing wire 12 in the hanging groove 144, the display device 10 can be conveniently installed on the lifting device 5000.

As illustrated in FIG. 15, the first driving unit 110 and the second driving unit 120 can be respectively coupled to either side of a base 302 of the moving part 100. The fixed pulleys 410, 420 can be respectively coupled to either side of the base 302 of the moving part 100.

The wire 105 can pass through the winding part 115 on the lower end of the moving part 100 and the fixed pulleys 410, 420 and be wound on the winding pulley 116 of the first driving unit 110 and the second driving unit 120.

Here, the wire 105 is wound in the form of a moving pulley by the winding part 115 and the fixed pulleys 410, 420 to transfer the driving force of the first driving unit 110 and the second driving unit 120 to the moving part 100 more efficiently.

As a result, the capacity and size of the driving motor 112 of the first driving unit 110 and the second driving unit 120 can be reduced, thereby realizing the moving part 100 to be thinner.

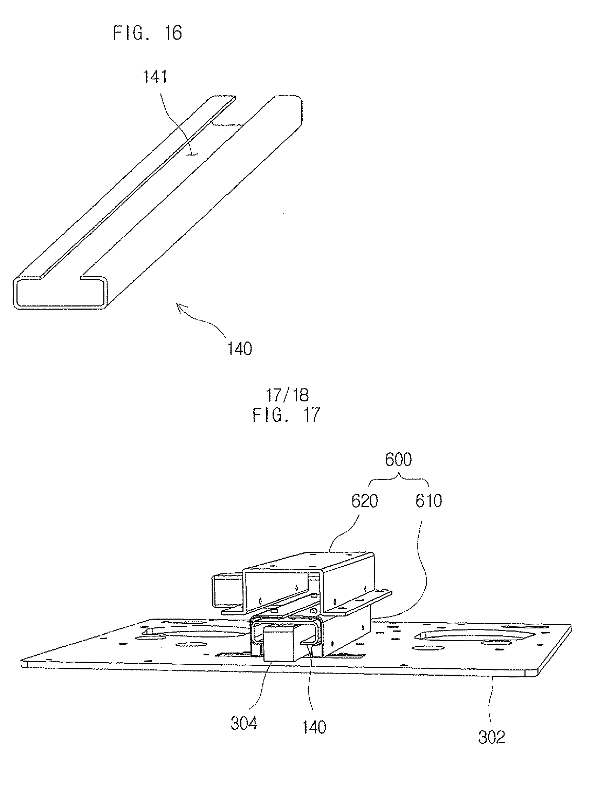

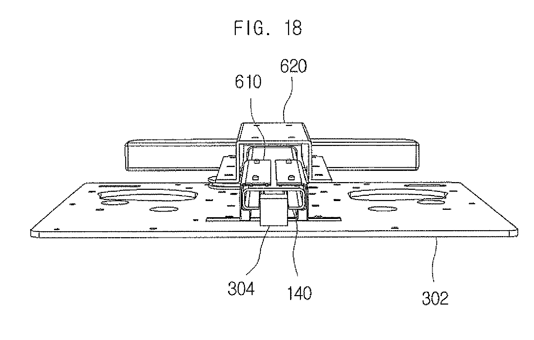

FIG. 16 is a perspective view showing the moving part body of the lifting device 5000 in accordance with a fifth embodiment of the present invention, and FIG. 17 is an exploded perspective view showing a portion of the lifting device 5000 in accordance with a fifth embodiment of the present invention. FIG. 18 is an exploded front view of a portion of the lifting device 5000 in accordance with a fifth embodiment of the present invention.

As illustrated in FIG. 16, a traveling groove 141 can be formed in a center of the moving part body 140 in the direction that the moving part body 140 is extended. A guide member 304 that is extended vertically can be coupled to a center of the base 302 of the bracket 300.

The guide member 304 can be inserted in the traveling groove 141 and slide on an inner circumferential surface of the traveling groove 141. In effect, the moving part 100 can be movably coupled to the bracket 300, which can in turn guide the movement of the moving part 100.

As illustrated in FIGS. 17 and 18, for the guide member 304 and the moving part body 140, a supporting cover 600 can support the moving part body 140 in such a way that the moving part body 140 can slide. The supporting cover 600 can include an upper face cover 620 and lateral face covers 610.

The lateral face covers 610 can be coupled to the base 302 of the bracket 300 so as to respectively support either side of the moving part body 140, and the upper face cover 620 can be coupled to the base 302 of the bracket 300 so as to cover upper faces of both lateral face covers 610.

Although some embodiments of the present invention have been described with reference to the accompanying drawings, it shall be appreciated that those who are ordinarily skilled in the art to which the present invention pertains can modify or change the present invention in a variety of ways without departing from the technical ideas and scopes that shall be only defined by the appended claims.

## Claims

1. A lifting device comprising:
a bracket installed on a wall;
a moving part movably coupled to the bracket;
a winding part coupled to the moving part;
a wire wound to the winding part; and
a driving unit winding the wire to move the moving part.

2. The lifting device of claim 1, wherein the moving part is coupled to the bracket.

3. The lifting device of claim 2, wherein the bracket is extended vertically so as to guide a movement of the moving part.

4. The lifting device of claim 1, wherein the winding part is a moving pulley that is rotatably coupled to the moving part.

5. The lifting device of claim 4, wherein:
the moving pulley is constituted in plurality; and
the lifting device further comprises a first fixed pulley interposed between the plurality of moving pulleys so as to wind the wire and coupled to one end of the bracket.

6. The lifting device of claim 2, wherein the moving part is extended vertically so that a movement of the moving part can be guided by the bracket.

7. The lifting device of claim 6, wherein a traveling groove is formed in the bracket in a direction that the bracket is extended, and
wherein the moving part comprises:
a guide member slidably inserted in the traveling groove; and
a supporting cover, an inner side of the supporting cover slidably covering an outer side of the bracket.

8. The lifting device of claim 1, wherein the driving unit is coupled to the moving part.

9. The lifting device of claim 8, wherein the bracket further comprises a second fixed pulley coupled to one end of the bracket so as to wind the wire.

10. The lifting device of claim 8, wherein the bracket is extended vertically so as to guide a movement of the moving part.

11. The lifting device of claim 10, wherein:
a guide hall is formed in the bracket in a direction that the bracket is extended; and
the winding part is movably inserted in the guide hall.

12. The lifting device of claim 10, further comprising a moving guide roller coupled to the moving part so as to support either side of the bracket.

13. The lifting device of claim 1, wherein the driving unit comprises a first driving unit and a second driving unit respectively winding either end of the wire.

14. The lifting device of claim 1, wherein the driving unit comprises:
a driving motor generating driving force;
a spur gear part including a plurality of spur gears that increase the driving force; and
a winding pulley engaged with the spur gear part so as to wind the wire.

15. The lifting device of claim 1, further comprising a stopper configured to prevent the wire from being unwound.

16. The lifting device of claim 15, wherein the stopper comprises:
a pressure bar, one end thereof being adjacent and rotatably coupled to the wire; and
an actuator providing pressure to the end of the pressure bar so that the one end of the pressure bar can hold the wire.

17. The lifting device of claim 1, further comprising a winding guide pulley configured to guide the wire being wound on the driving unit.

18. The lifting device of claim 1, further comprising a controller configured to apply and control an operation pulse signal to the driving unit.

19. The lifting device of claim 18, wherein the controller is configured to count the operation pulse signal while the moving part is moving between an upper limit and a lower limit of a movement range of the bracket.

20. The lifting device of claim 19, further comprising a limit switch coupled to the upper limit on an upper side of the bracket,
wherein the controller is configured to assess the upper limit by a position signal of the limit switch for the moving part.

21. The lifting device of claim 20, wherein the controller is configured to assess the lower limit by an input of a user.

22. The lifting device of claim 1, wherein a hanging groove is formed on an upper surface of the moving part, the hanging groove being extended to both sides of the upper surface of the moving part.
